# EUROPÄISCHE PATENTSCHRIFT

(11) **EP 3 295 001 B1**
(45) Veröffentlichungstag und Bekanntmachung des Hinweises auf die Patenterteilung: **03.07.2019**
(21) Anmeldenummer: 16736765.5
(22) Anmeldetag: 09.05.2016
(51) Int. Cl.: F01N 3/04, F01N 3/20, F01N 11/00

(54) **VERFAHREN ZUM SPÜLEN EINES ABGASREINIGUNGSSYSTEMS**
METHOD FOR FLUSHING AN EXHAUST GAS PURIFICATION SYSTEM
PROCÉDÉ DE NETTOYAGE D'UN SYSTÈME D'ÉPURATION DES GAZ D'ÉCHAPPEMENT

(30) Priorität: 11.05.2015 AT 503842015
(43) Veröffentlichungstag der Anmeldung: 21.03.2018
(73) Patentinhaber: Innio Jenbacher GmbH & Co OG, 6200 Jenbach (AT)
(72) Erfinder: HILLEN, Friedhelm, 6200 Jenbach (AT); MEHRING, Max, 64823 Gross-Umstadt (DE)
(74) Vertreter: Torggler & Hofinger Patentanwälte
(86) Internationale Anmeldenummer: PCT/AT2016/050135
(87) Internationale Veröffentlichungsnummer: WO 2016/179623

(56) Entgegenhaltungen:
- WO-A1-03/069135
- WO-A1-2008/069780
- DE-A1- 10 235 194

## Beschreibung

Die Erfindung betrifft ein Verfahren zum Spülen eines einen katalytischen Konverter mit wenigstens einem Katalysatorbett umfassenden Abgasreinigungssystems einer Brennkraftmaschine, wobei in einer aktiven Betriebsphase des Abgasreinigungssystems dem Abgasreinigungssystem ein Abgas der Brennkraftmaschine zugeführt wird und in einer passiven Betriebsphase des Abgasreinigungssystems dem Abgasreinigungssystem kein Abgas zugeführt wird, wobei eine Temperatur des wenigstens einen Katalysatorbetts ermittelt wird und das Spülen in Abhängigkeit von der ermittelten Temperatur erfolgt. Verfahren zum Spülen eines in einem Abgasreinigungssystem einer Brennkraftmaschine verbauten katalytischen Konverters mit wenigstens einem Katalysatorbett sind bereits bekannt, um während des Betriebs der Brennkraftmaschine ein sich zu stark erwärmendes Katalysatorbett wieder abzukühlen, sodass ein Überhitzen und eine damit einhergehende Beschädigung des Katalysatorbetts verhindert werden kann (z. B. DE 2401287, EP 1033480 A1). Die DE 102 35 194 A1 offenbart ein Verfahren und Vorrichtung zum Betreiben eines Verbrennungsmotors.

Versuche der Anmelderin haben gezeigt, dass nach dem Abschalten einer Brennkraftmaschine, beispielsweise eines stationären Hubkolben-Gasmotors, die Abgastemperatur stromabwärts einer Abgasturbine eines Turboladers auf bis zu mehr als 400 °C ansteigen kann. Dieses Ansteigen der Abgastemperatur führt zu einer Erwärmung eines im Abgasreinigungssystem angeordneten katalytischen Konverters. Wenn nun die Brennkraftmaschine erneut gestartet werden soll, jedoch einen Fehlstart erleidet, so sind die Abgasleitungen und somit auch das Abgasreinigungssystem mitsamt dem katalytischen Konverter mit einem Brenngas-Luft- Gemisch gefüllt. Abhängig von der Temperatur des Katalysatorbetts des katalytischen Konverters und der Anzahl von nicht erfolgreichen Startversuchen in Serie kann es zu unerwünschter Oxidation des Brenngases kommen, wodurch Beschädigungen des katalytischen Konverters und im schlimmsten Fall sogar eine Verpuffung hervorgerufen werden können. Aufgabe der Erfindung ist es daher, ein gegenüber dem Stand der Technik verbessertes Verfahren zum Spülen eines einen katalytischen Konverters mit wenigstens einem Katalysatorbett umfassenden Abgasreinigungssystems einer Brennkraftmaschine anzugeben, durch das ein sichereres Hochfahren der Brennkraftmaschine erzielt werden kann.

Diese Aufgabe wird erfindungsgemäß durch ein Verfahren mit den Merkmalen des Anspruchs 1 gelöst. Vorteilhafte Ausgestaltungen der Erfindung sind in den abhängigen Ansprüchen angegeben.

Gemäß der Erfindung ist also vorgesehen, dass das Abgasreinigungssystem in der passiven Betriebsphase des Abgasreinigungssystems gespült wird.

In Bezug auf das Abgasreinigungssystem werden grundsätzlich zwei Arten von Betriebsphasen unterschieden. Eine aktive Betriebsphase des Abgasreinigungssystems ist dadurch charakterisiert, dass dem Abgasreinigungssystem ein Abgas der Brennkraftmaschine zugeführt wird. Eine passive Betriebsphase des Abgasreinigungssystems ist dadurch charakterisiert, dass dem Abgasreinigungssystem kein Abgas zugeführt wird. Während des laufenden Betriebs einer Brennkraftmaschine, während dessen dem Abgasreinigungssystem ein Abgas der Brennkraftmaschine zugeführt wird, befindet sich somit das Abgasreinigungssystem in einer aktiven Betriebsphase.

Durch das Spülen des Abgasreinigungssystems in einer passiven Betriebsphase des Abgasreinigungssystems kann ein Einfluss auf das Abgasreinigungssystem auch außerhalb einer aktiven Betriebsphase des Abgasreinigungssystems genommen werden. Insbesondere kann damit eine Überhitzung des katalytischen Konverters bzw. dessen Katalysatorbetten nach dem Abschalten einer Brennkraftmaschine oder vor dem Hochfahren einer Brennkraftmaschine nach vorhergehenden Fehlstarts vermieden werden.

Ein Spülen des Abgasreinigungssystemes kann durch eine Spülvorrichtung ausgeführt werden, welche über einen eigenen Antrieb verfügt. Dies hat den wesentlichen Vorteil, dass eine Spülung des Abgasreinigungssystemes unabhängig vom Betriebszustand der Brennkraftmaschine durchgeführt werden kann. Dadurch wird es ermöglicht auch eine Spülung vorzunehmen, wenn die Brennkraftmaschine sich in einem passiven Betriebszustand befindet. Auch die Nachteile, wie bei Verwendung eines elektrischen Turboladers als Spülvorrichtung, der die Brennkraftmaschine zwangsweise mitgekühlt, wird dadurch beseitigt. Da, durch eine separat angetriebene Spülvorrichtung lediglich das Abgasreinigungssystem gespült wird und somit auch gekühlt wird, kommt es zu keiner ungewollten Auskühlung der Brennkraftmaschine. Ein solcher separater Antrieb der Spülvorrichtung kann beispielsweise durch einen Elektromotor ausgeführt sein

In einer bevorzugten Ausführungsform kann vorgesehen sein, dass das Abgasreinigungssystem nur in der passiven Betriebsphase des Abgasreinigungssystems gespült wird. Mit anderen Worten erfolgt hierbei das Spülen des Abgasreinigungssystems ausschließlich in den passiven Betriebsphasen des Abgasreinigungssystems, in denen dem Abgasreinigungssystem kein Abgas zugeführt wird. Vorzugsweise kann vorgesehen sein, dass die Temperatur des wenigstens einen Katalysatorbetts in der passiven Betriebsphase des Abgasreinigungssystems ermittelt wird.

Erfindungsgemäß ist vorgesehen, dass das Abgasreinigungssystem nach einem Abschalten der Brennkraftmaschine gespült wird. Dadurch wird ein im Abgastrakt gegebenenfalls noch vorhandenes brennbares Brennstoff-Luft-Gemisch aus dem Abgastrakt entfernt, bevor erneut ein Start der Brennkraftmaschine durchgeführt wird. Eine besondere Ausführungsvariante sieht vor, dass abhängig von der ermittelten Temperatur eine Zeitdauer ermittelt wird, während der das Abgasreinigungssystem gespült wird. Bei der Bestimmung der Zeitdauer kann dabei berücksichtigt werden, dass bei einem heißen Katalysator bzw. Katalysatorbett länger als bei einem kälteren Katalysator bzw. Katalysatorbett zu spülen ist, um sicherzugehen, dass kein brennbares Brennstoff-Luft-Gemisch mehr im Abgastrakt vorhanden ist.

Gemäß einer besonders bevorzugten Ausführungsform kann vorgesehen sein, dass das Abgasreinigungssystem vor einem Hochfahren der Brennkraftmaschine gespült wird. Dadurch kann sichergestellt werden, dass beim Hochfahren der Brennkraftmaschine im Abgastrakt kein brennbares Brennstoff-Luft-Gemisch mehr vorhanden ist, das durch unerwünschte Oxidation im katalytischen Konverter Beschädigungen des katalytischen Konverters verursachen kann.

Als besonders vorteilhaft hat es sich herausgestellt, wenn das Abgasreinigungssystem so lange gespült wird, bis die Temperatur des wenigstens einen Katalysatorbetts kleiner oder gleich einer vorgebbaren Solltemperatur ist. Die vorgebbare Solltemperatur kann dabei vorzugsweise so gewählt werden, dass unterhalb der vorgebbaren Solltemperatur vom katalytischen Konverter kein nennenswertes Risiko mehr ausgeht, als Zündquelle zu dienen. Die vorgebbare Solltemperatur kann je nach Dimensionierung des katalytischen Konverters und der verwendeten Brenngasqualität in einem Bereich von etwa 200°C bis etwa 400°C liegen, beispielsweise bei etwa 300°C.

Dabei kann vorgesehen sein, dass das Abgasreinigungssystem gespült wird, falls die Temperatur des wenigstens einen Katalysatorbetts vor dem Spülen größer oder gleich einem vorgebbaren Schwellwert ist. Der vorgebbare Schwellwert kann dabei vorzugsweise so gewählt werden, dass unterhalb des vorgebbaren Schwellwerts vom katalytischen Konverter kein nennenswertes Risiko mehr ausgeht, als Zündquelle zu dienen. Der vorgebbare Schwellwert kann je nach Dimensionierung des katalytischen Konverters in einem Bereich von etwa 200°C bis etwa 400°C liegen, beispielsweise bei etwa 300°C.

Für den Fall, dass die Temperatur des wenigstens einen Katalysatorbetts kleiner dem vorgebbaren Schwellwert ist, kann vorgesehen sein, dass ein sogenanntes Sicherheitsspülen für eine vorgebbare Zeitdauer erfolgt, die je nach Größe des Abgastraktes in einem Bereich von etwa 30 Sekunden bis etwa 225 Sekunden liegen kann.

Bei einer weiteren bevorzugten Ausführungsform kann vorgesehen sein, dass ein erster Abgastemperaturwert stromaufwärts des katalytischen Konverters ermittelt wird und ein zweiter Abgastemperaturwert stromabwärts des katalytischen Konverters ermittelt wird, wobei die Temperatur des wenigstens einen Katalysatorbetts unter Berücksichtigung des ersten Abgastemperaturwerts und des zweiten Abgastemperaturwerts ermittelt wird.

Vorzugsweise kann vorgesehen sein, dass das Abgasreinigungssystem mit Luft gespült wird.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine Brennkraftmaschine mit einem Abgasreinigungssystem,
- Fig. 2: ein Ablaufdiagramm bezüglich des Spülens eines Abgasreinigungssystems nach dem Abschalten einer Brennkraftmaschine,
- Fig. 3: ein Ablaufdiagramm in Bezug auf das Spülen eines Abgasreinigungssystems vor dem Hochfahren einer Brennkraftmaschine.

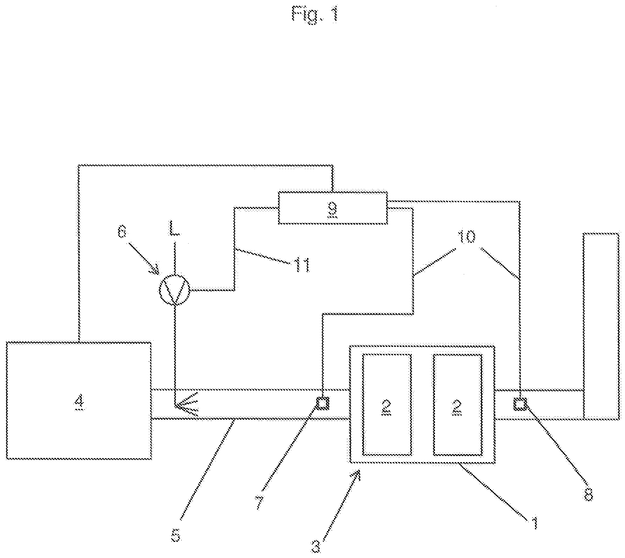

Fig. 1 zeigt eine Brennkraftmaschine 4, in deren Abgasleitung 5 ein Abgasreinigungssystem 3 angeordnet ist. Bei der Brennkraftmaschine 4 handelt es sich in diesem Beispiel um einen stationären Gasmotor, der mit einem Brenngas-Luft-Gemisch betrieben wird. Das Abgasreinigungssystem 3 umfasst einen katalytischen Konverter 1, der in diesem Beispiel mit zwei Katalysatorbetten 2 ausgestattet ist. Stromaufwärts des Abgasreinigungssystems 3 ist eine Spülvorrichtung 6 angeordnet, durch die Luft L in die Abgasleitung 5 stromaufwärts des Abgasreinigungssystems 3 zum Spülen des Abgasreinigungssystems 3 eingebracht werden kann.

Gemäß dem vorgeschlagenen Verfahren erfolgt das Spülen des Abgasreinigungssystems 3 in Abhängigkeit einer ermittelten Temperatur T der Katalysatorbetten 2 des katalytischen Konverters 1. Zur Ermittlung der Temperatur T sind in diesem Beispiel zwei Temperaturerfassungseinrichtungen 7, 8 stromaufwärts und stromabwärts des Abgasreinigungssystems 3 angeordnet. Die Temperaturerfassungseinrichtungen 7, 8 ermitteln die Temperatur des Abgases der Brennkraftmaschine 4. Die Temperaturerfassungseinrichtung 7 erfasst einen ersten Abgastemperaturwert T₁ stromaufwärts des katalytischen Konverters 1 und die Temperaturerfassungseinrichtung 8 ermittelt einen zweiten Abgastemperaturwert T₂ stromabwärts des katalytischen Konverters 1. Über Signalleitungen 10 werden die ermittelten Abgastemperaturwerte T₁, T₂ an eine Steuervorrichtung 9 gemeldet, die aus dem ersten Abgastemperaturwert T₁ und dem zweiten Abgastemperaturwert T₂ eine geschätzte Temperatur T der Katalysatorbetten 2 ermittelt. Diese Ermittlung der Temperatur T der Katalysatorbetten 2 kann beispielsweise dadurch erfolgen, dass der arithmetische Mittelwert aus erstem Abgastemperaturwert T₁ und zweitem Abgastemperaturwert T₂ berechnet wird oder beispielsweise auch weitergehende Berechnungen unter Berücksichtigung der kalorischen Einflussgrößen, der Ansprechzeiten der Messsignalketten und der Betriebshistorie vorgenommen werden. In Abhängigkeit von der ermittelten Temperatur T kann die Steuervorrichtung 9 über eine Steuerleitung 11 die Spülvorrichtung 6 aktivieren, um Luft L stromaufwärts des Abgasreinigungssystems 3 in die Abgasleitung 5 einzubringen und dadurch das Abgasreinigungssystem 3 zu spülen.

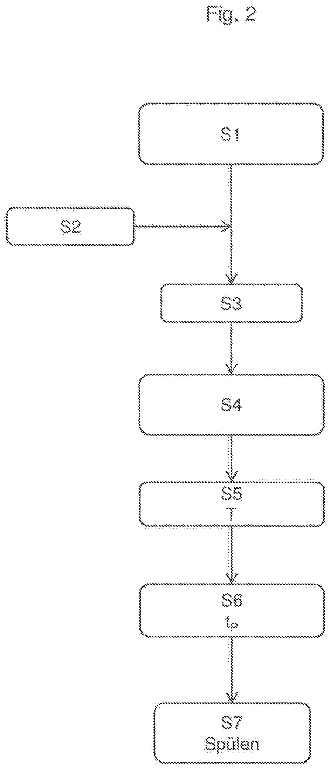

Fig. 2 zeigt beispielhaft ein Ablaufdiagramm für das Spülen des Abgasreinigungssystems 3 nach dem Abschalten der Brennkraftmaschine 4. Ausgehend von Schritt S1, in dem die Brennkraftmaschine läuft und dem Abgasreinigungssystem 3 Abgas zuführt, wodurch das Abgasreinigungssystem 3 sich in einer aktiven Betriebsphase befindet, geht in Schritt S2 ein Stopp-Befehl zum Stoppen der Brennkraftmaschine 4 ein. In Schritt S3 wird demnach die Brennkraftmaschine 4 gestoppt. Dadurch wird dem Abgasreinigungssystem 3 kein weiteres Abgas der Brennkraftmaschine 4 mehr zugeführt und das Abgasreinigungssystem 3 befindet sich in Schritt S4 in einer passiven Betriebsphase. In dieser passiven Betriebsphase des Abgasreinigungssystems 3 wird nunmehr in Schritt S5 die Temperatur T des wenigstens einen Katalysatorbetts 2 des katalytischen Konverters 1 des Abgasreinigungssystems 3 ermittelt. In Schritt S6 wird abhängig von der ermittelten Temperatur T des wenigstens einen Katalysatorbetts 2 eine Zeitdauer tₚ ermittelt, während der in Schritt S7 das Abgasreinigungssystem 3 gespült wird.

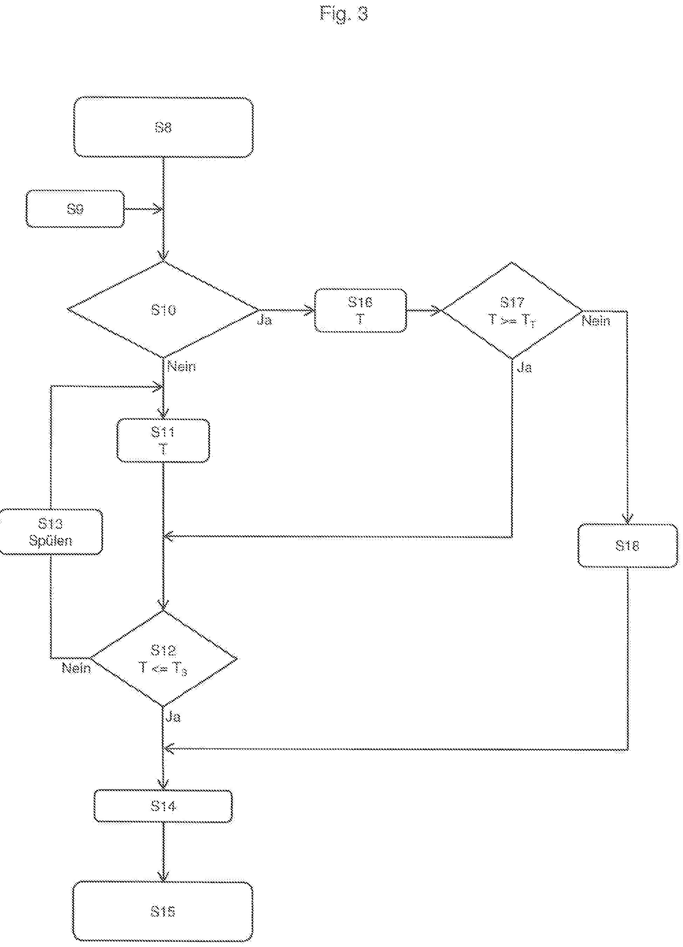

Fig. 3 zeigt beispielhaft ein Ablaufdiagramm für das Spülen des Abgasreinigungssystems 3 vor dem Hochfahren der Brennkraftmaschine 4. In Schritt S8 wird hier von einer passiven Betriebsphase des Abgasreinigungssystems 3 ausgegangen, die dadurch hervorgerufen sein kann, dass die Brennkraftmaschine 4 nicht läuft. In Schritt S9 erfolgt der Startbefehl zum Starten der Brennkraftmaschine 4. In Schritt S10 wird abgeprüft, ob dem Startbefehl ein Fehlstart der Brennkraftmaschine 4 vorausgegangen ist oder ob die Brennkraftmaschine 4 zuvor (z. B. innerhalb eines vorgebbaren Zeitraums) abgeschaltet wurde. Falls kein Fehlstart vorangegangen ist und die Brennkraftmaschine 4 nicht kürzlich zuvor abgeschaltet wurde, so erfolgt in Schritt S11 die Ermittlung der Temperatur T des wenigstens einen Katalysatorbetts 2 des katalytischen Konverters 1 des Abgasreinigungssystems 3. In Schritt S12 wird überprüft, ob die ermittelte Temperatur T des wenigstens einen Katalysatorbetts 2 kleiner oder gleich einem Solltemperaturwert T_{S} ist. Falls dies nicht der Fall ist und also die Temperatur T größer als der Solltemperaturwert T_{S} ist, so wird in Schritt S13 das Abgasreinigungssystem 3 gespült und bei Schritt S11, der Ermittlung der Temperatur T des wenigstens einen Katalysatorbetts 2, fortgesetzt. Falls sich bei der Überprüfung in Schritt S12 herausstellt, dass die Temperatur T des wenigstens einen Katalysatorbetts 2 kleiner oder gleich der Solltemperatur T_{S} ist, so kann in Schritt S14 die Brennkraftmaschine 4 gestartet werden. Durch das Starten der Brennkraftmaschine 4 wird dem Abgasreinigungssystem 3 ein Abgas der Brennkraftmaschine 4 zugeführt und das Abgasreinigungssystem 3 befindet sich in Schritt S15 in einer aktiven Betriebsphase.

Falls in Schritt S10 festgestellt wird, dass ein Fehlstart der Brennkraftmaschine 4 vorausgegangen ist oder die Brennkraftmaschine 4 kürzlich zuvor abgeschaltet wurde, so wird in Schritt S16 die Temperatur T des wenigstens einen Katalysatorbetts 2 ermittelt und in Schritt S17 überprüft, ob die Temperatur T des wenigstens einen Katalysatorbetts 2 größer oder gleich einem Schwellwert T_{T} ist. Falls dies der Fall ist und also die Temperatur T größer oder gleich dem Schwellwert T_{T} ist, so wird in Schritt S12 fortgesetzt. Falls dies nicht der Fall ist und also die Temperatur T kleiner als der Schwellwert T_{T} ist, so wird in Schritt S18 ein Sicherheitsspülen des Abgasreinigungssystems 3 durchgeführt. Dabei kann das Abgasreinigungssystem 3 je nach Größe des Abgastraktes für eine fix vorgegebene Zeitdauer von beispielsweise 30 bis 225 Sekunden gespült werden. Nach diesem Sicherheitsspülen in Schritt S18 wird mit Schritt S14 (Starten der Brennkraftmaschine 4) fortgesetzt.

## Patentansprüche

1. Verfahren zum Spülen eines einen katalytischen Konverter (1) mit wenigstens einem Katalysatorbett (2) umfassenden Abgasreinigungssystems (3) einer Brennkraftmaschine (4), wobei in einer aktiven Betriebsphase des Abgasreinigungssystems (3) dem Abgasreinigungssystem (3) ein Abgas der Brennkraftmaschine (4) zugeführt wird und in einer passiven Betriebsphase des Abgasreinigungssystems (3) dem Abgasreinigungssystem (3) kein Abgas zugeführt wird, wobei eine Temperatur (T) des wenigstens einen Katalysatorbetts (2) ermittelt wird und das Spülen in Abhängigkeit von der ermittelten Temperatur (T) erfolgt, wobei das Abgasreinigungssystem (3) in der passiven Betriebsphase des Abgasreinigungssystems (3) durch eine Spülvorrichtung (6), welche unmittelbar mit einer Abgasleitung (5) verbunden ist, gespült wird, **dadurch gekennzeichnet, dass** das Abgasreinigungssystem (3) vor einem Hochfahren der Brennkraftmaschine (4) gespült wird und das Verfahren in einer passiven Betriebsphase des Abgasreinigungssystems (3) abprüft, ob einem Startbefehl zum Starten der Brennkraftmaschine (4) ein Fehlstart vorausgegangen ist oder ob die Brennkraftmaschine (4) zuvor abgeschaltet wurde.

2. Verfahren nach Anspruch 1 , **dadurch gekennzeichnet, dass** das Abgasreinigungssystem (3) nur in der passiven Betriebsphase des Abgasreinigungssystems (3) gespült wird.

3. Verfahren nach Anspruch 1 oder 2, **dadurch gekennzeichnet, dass** die Temperatur (T) des wenigstens einen Katalysatorbetts (2) in der passiven Betriebsphase des Abgasreinigungssystems (3) ermittelt wird.

4. Verfahren nach einem der Ansprüche 1 bis 3, **dadurch gekennzeichnet, dass** das Abgasreinigungssystem (3) nach einem Abschalten der Brennkraftmaschine (4) gespült wird.

5. Verfahren nach einem der Ansprüche 1 bis 4, **dadurch gekennzeichnet, dass** abhängig von der ermittelten Temperatur (T) eine Zeitdauer (tp) ermittelt wird, während der das Abgasreinigungssystem (3) gespült wird.

6. Verfahren nach einem der Ansprüche 1 bis 5, **dadurch gekennzeichnet, dass** das Abgasreinigungssystem (3) so lange gespült wird, bis die Temperatur (T) des wenigstens einen Katalysatorbetts (2) kleiner oder gleich einer vorgebbaren Solltemperatur (T_{S}) ist.

7. Verfahren nach Anspruch 6, **dadurch gekennzeichnet, dass** das Abgasreinigungssystem (3) gespült wird, falls die Temperatur (T) des wenigstens einen Katalysatorbetts (2) vor dem Spülen größer oder gleich einem vorgebbaren Schwellwert (TT) ist.

8. Verfahren nach einem der Ansprüche 1 bis 7, **dadurch gekennzeichnet, dass** ein erster Abgastemperaturwert (Ti) stromaufwärts des katalytischen Konverters (1) ermittelt wird und ein zweiter Abgastemperaturwert (T2) stromabwärts des katalytischen Konverters (1) ermittelt wird, wobei die Temperatur (T) des wenigstens einen Katalysatorbetts (2) unter Berücksichtigung des ersten Abgastemperaturwerts (Ti) und des zweiten Abgastemperaturwerts (T2) ermittelt wird.

## Claims

1. A method of flushing an exhaust gas cleaning system (3) of an internal combustion engine (4) that comprises a catalytic converter (1) having at least one catalyst bed (2), wherein in an active operating phase of the exhaust gas cleaning system (3) an exhaust gas from the internal combustion engine (4) is fed to the exhaust gas cleaning system (3) and in a passive operating phase of the exhaust gas cleaning system (3) no exhaust gas is fed to the exhaust gas cleaning system (3), wherein a temperature (T) of the at least one catalyst bed (2) is ascertained and the flushing operation is effected in dependence on the ascertained temperature (T), wherein the exhaust gas cleaning system (3) in the passive operating phase of the exhaust gas cleaning system (3) is flushed by a flushing device (6) directly connected to an exhaust gas line (5), **characterised in that** the exhaust gas cleaning system (3) is flushed before a start-up of the internal combustion engine (4) and in a passive operating phase of the exhaust gas cleaning system (3) the method checks whether a failed start preceded a starting command for starting the internal combustion engine (4) or whether the internal combustion engine (4) was previously shut down.

2. A method according to claim 1 **characterised in that** the exhaust gas cleaning system (3) is flushed only in the passive operating phase of the exhaust gas cleaning system (3).

3. A method according to claim 1 or claim 2 **characterised in that** the temperature (T) of the at least one catalyst bed (2) is ascertained in the passive operating phase of the exhaust gas cleaning system (3).

4. A method according to one of claims 1 to 3 **characterised in that** the exhaust gas cleaning system (3) is flushed after a shut-down of the internal combustion engine (4).

5. A method according to one of claims 1 to 4 **characterised in that** in dependence on the ascertained temperature (T) a period (tp) is ascertained, during which the exhaust gas cleaning system (3) is flushed.

6. A method according to one of claims 1 to 5 **characterised in that** the exhaust gas cleaning system (3) is flushed until the temperature (T) of the at least one catalyst bed (2) is less than or equal to a predeterminable target temperature (T_{S}).

7. A method according to claim 6 **characterised in that** the exhaust gas cleaning system (3) is flushed if the temperature (T) of the at least one catalyst bed (2) is greater than or equal to a predeterminable threshold value (TT) prior to the flushing operation.

8. A method according to one of claims 1 to 7 **characterised in that** a first exhaust gas temperature value (Ti) is ascertained upstream of the catalytic converter (1) and a second exhaust gas temperature value (T2) is ascertained downstream of the catalytic converter (1) wherein the temperature (T) of the at least one catalyst bed (2) is ascertained having regard to the first exhaust gas temperature value (Ti) and the second exhaust gas temperature value (T2).

## Revendications

1. Procédé servant à nettoyer un système d'épuration de gaz d'échappement (3), comprenant un convertisseur catalytique (1) avec au moins un lit de catalyseur (2), d'un moteur à combustion interne (4), dans lequel lors d'une phase de fonctionnement active du système d'épuration de gaz d'échappement (3), des gaz d'échappement du moteur à combustion interne (4) sont amenés au système d'épuration de gaz d'échappement (3) et, lors d'une phase de fonctionnement passive du système d'épuration de gaz d'échappement (3), aucun gaz d'échappement n'est amené au système d'épuration de gaz d'échappement (3), dans lequel une température (T) de l'au moins un lit de catalyseur (2) est déterminée et le nettoyage est effectué en fonction de la température (T) déterminée, dans lequel le système d'épuration de gaz d'échappement (3) est nettoyé lors de la phase de fonctionnement passive du système d'épuration de gaz d'échappement (3) par un dispositif de nettoyage (6), lequel est directement relié à un conduit de gaz d'échappement (5), **caractérisé en ce que** le système d'épuration de gaz d'échappement (3) est nettoyé avant un démarrage du moteur à combustion interne (4) et le procédé vérifie, lors d'une phase de fonctionnement passive du système d'épuration de gaz d'échappement (3), si un démarrage défectueux a précédé une instruction de démarrage pour démarrer le moteur à combustion interne (4) ou si le moteur à combustion interne (4) a été désactivé au préalable.

2. Procédé selon la revendication 1, **caractérisé en ce que** le système d'épuration de gaz d'échappement (3) est nettoyé seulement lors de la phase de fonctionnement passive du système d'épuration de gaz d'échappement (3).

3. Procédé selon la revendication 1 ou 2, **caractérisé en ce que** la température (T) de l'au moins un lit de catalyseur (2) est déterminée lors de la phase de fonctionnement passive du système d'épuration de gaz d'échappement (3).

4. Procédé selon l'une quelconque des revendications 1 à 3, **caractérisé en ce que** le système d'épuration de gaz d'échappement (3) est nettoyé après une désactivation du moteur à combustion interne (4).

5. Procédé selon l'une quelconque des revendications 1 à 4, **caractérisé en ce qu'**en fonction de la température (T) déterminée, une période de temps (tp) est déterminée, pendant laquelle le système d'épuration de gaz d'échappement (3) est nettoyé.

6. Procédé selon l'une quelconque des revendications 1 à 5, **caractérisé en ce que** le système d'épuration de gaz d'échappement (3) est nettoyé jusqu'à ce que la température (T) de l'au moins un lit de catalyseur (2) soit inférieure ou égale à une température théorique (T_{S}) pouvant être spécifiée.

7. Procédé selon la revendication 6, **caractérisé en ce que** le système d'épuration de gaz d'échappement (3) est nettoyé si la température (T) de l'au moins un lit de catalyseur (2) avant le nettoyage est supérieure ou égale à une valeur de seuil (TT) pouvant être spécifiée.

8. Procédé selon l'une quelconque des revendications 1 à 7, **caractérisé en ce qu'**une première valeur de température de gaz d'échappement (Ti) est déterminée en amont du convertisseur catalytique (1) et une seconde valeur de température de gaz d'échappement (T2) est déterminée en aval du convertisseur catalytique (1), dans lequel la température (T) de l'au moins un lit de catalyseur (2) est déterminée en tenant compte de la première valeur de température de gaz d'échappement (Ti) et de la seconde valeur de température de gaz d'échappement (T2).
